(19) **Europäisches Patentamt European Patent Office Office européen des brevets**

(11) **EP 4 492 508 A1**

(12) **EUROPEAN PATENT APPLICATION**

(43) Date of publication:
15.01.2025 Bulletin 2025/03

(21) Application number: 24187551.7

(22) Date of filing: 09.07.2024

(51) International Patent Classification (IPC):
H01M 8/04007 (2016.01)  H01M 8/04302 (2016.01)
H01M 8/0432 (2016.01)  H01M 8/04701 (2016.01)
H01M 8/065 (2016.01)  H01M 8/086 (2016.01)
H01M 16/00 (2006.01)  H01M 8/10 (2016.01)

(52) Cooperative Patent Classification (CPC):
H01M 8/086; H01M 8/04037; H01M 8/04302;
H01M 8/0432; H01M 8/04701; H01M 8/065;
H01M 16/006; H01M 2008/1095; H01M 2250/402;
H01M 2250/405

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.07.2023 US 202363512988 P
18.06.2024 US 202418746101

(71) Applicant: HyAxiom, Inc.
East Hartford, CT 06108 (US)

(72) Inventors:
• LIVAICH, Eric
South Windsor, 06074 (US)
• PATTERSON, Timothy William
West Hartford, 06107 (US)
• KANURI, Sridhar
South Glastonbury, 06073 (US)
• CHAKULSKI, Brian
West Hartford, 06117 (US)

(74) Representative: Marks & Clerk LLP
15 Fetter Lane
London EC4A 1BW (GB)

(54) **HYDROGEN POWER PLANT SYSTEMS AND METHODS OF OPERATION ASSOCIATED WITH COLD START**

(57) A hydrogen system for generating power may include a fuel cell stack selectively coupled to a hydrogen fuel source. A control may be configured to cause the fuel cell stack to operate in a first mode in response to a first predetermined temperature threshold being met such that the fuel cell stack may generate electricity when below a target operating temperature. The control may be configured to cause the fuel cell stack to operate in a second mode in response to a second predetermined temperature threshold being met subsequent to the first predetermined temperature threshold being met. A method of operating a fuel cell stack is also disclosed.

Fig-1

EP 4 492 508 A1

**Description**

BACKGROUND

This disclosure relates to power generation, and more particularly hydrogen fuel cells and methods of operation.

Natural gas (NG) powerplants may take several hours from initial startup and heat up to operation where it can generate and export power. There are constraints that exist in NG units that may necessitate a relatively longer heat up time. These may include reformer heat ups, generating steam for an ejector, and reaching a high enough operating temperature to operate with some carbon monoxide (CO) in the fuel stream.

The growth of green hydrogen ($H_2$) infrastructure is also projecting to increase the demand to use some of the $H_2$ to convert to electricity for grid balancing and other applications.

SUMMARY

A hydrogen system for generating power may include a phosphoric acid fuel cell stack selectively coupled to a hydrogen fuel source. A control may include a processor and memory. The control may be configured to cause the fuel cell stack to operate in a first mode in response to a first predetermined temperature threshold being met such that the fuel cell stack may generate electricity when below a target operating temperature of the fuel cell stack. The control may be configured to cause the fuel cell stack to operate in a second mode in response to a second predetermined temperature threshold being met subsequent to the first predetermined temperature threshold being met. The second predetermined temperature threshold may be associated with the target operating temperature of the fuel cell stack.

A method of operating a phosphoric acid fuel cell stack may include operating the phosphoric acid fuel cell stack in a first mode in response to a first predetermined temperature threshold being met such that the fuel cell stack may generate electricity when below a target operating temperature of the fuel cell stack. The method may include operating the fuel cell stack in a second mode in response to a second predetermined temperature threshold being met subsequent to the first predetermined temperature threshold being met. The second predetermined temperature threshold may be associated with the target operating temperature of the fuel cell stack.

An aspect of the present disclosure relates to a hydrogen system for generating power comprising:

a phosphoric acid fuel cell stack selectively coupled to a hydrogen fuel source; and
a control including a processor and memory;
wherein the control is configured to cause the fuel cell stack to operate in a first mode in response to a first predetermined temperature threshold being met such that the fuel cell stack generates electricity when below a target operating temperature of the fuel cell stack; and
wherein the control is configured to cause the fuel cell stack to operate in a second mode in response to a second predetermined temperature threshold being met subsequent to the first predetermined temperature threshold being met, the second predetermined temperature threshold associated with the target operating temperature of the fuel cell stack.

The first predetermined temperature threshold may be less than 50 percent of the second predetermined temperature threshold.

The first predetermined temperature threshold may be less than 60 degrees Celsius

The second predetermined temperature threshold may be greater than 150 degrees Celsius.

The first predetermined temperature threshold may be less than 33 percent of the second predetermined temperature threshold.

The second predetermined temperature threshold may be a temperature sufficient to convert a predetermined percentage of the fuel conveyed to the fuel cell stack into energy without degradation of the fuel cell stack.

The fuel cell stack may include a plurality of fuel cells. Each of the fuel cells may include an anode, a cathode and a solid polymer electrolyte membrane.

The hydrogen system may further comprise a cooling assembly for providing cooling and/or heating augmentation to the fuel cell stack. The cooling assembly may comprise:

a cooling loop;
a cooler coupled to the fuel cell stack; and
a heating source;
wherein the cooler and the heating source situated in the cooling loop.

The hydrogen system may further comprise an energy storage system configured to provide power to the heating source. The controller may be configured to cause the energy storage system to provide power to the heating source such that the heating source provides heating augmentation to the fuel cell stack.

The controller may be configured to cause the heating source to heat the fuel cell stack in the first mode from the first predetermined temperature threshold to the second predetermined temperature threshold.

A maximum quantity of power produceable by the fuel cell stack in the second mode may be greater than a maximum quantity of power produceable by the fuel cell stack in the first mode.

An aspect of the present disclosure relates to a method of operating a phosphoric acid fuel cell stack comprising:

operating the phosphoric acid fuel cell stack in a first mode in response to a first predetermined temperature threshold being met such that the fuel cell stack generates electricity below a target operating temperature of the fuel cell stack; and

operating the fuel cell stack in a second mode in response to a second predetermined temperature threshold being met subsequent to the first predetermined temperature threshold being met, the second predetermined temperature threshold associated with the target operating temperature of the fuel cell stack.

The first predetermined temperature threshold may be less than 50 percent of the second predetermined temperature threshold.

The first predetermined temperature threshold may be less than 60 degrees Celsius.

The second predetermined temperature threshold may be greater than 150 degrees Celsius.

The step of operating the fuel cell stack in the first mode may include heating the fuel cell stack by a heating source.

The step of operating the fuel cell stack in the first mode may include supplying a first quantity of power to one or more loads associated with a power demand. The step of operating the fuel cell stack in the second mode may include supplying a second quantity of power to the one or more loads, the second quantity of power being greater than the first quantity of power.

The first quantity of power may be insufficient to meet an entirety of the power demand. The method may further comprise causing an energy storage system to supply a difference in the power demand in the first mode such that the power demand is substantially met.

The step of operating the fuel cell stack in the first mode may include heating the fuel cell stack by a heating source such that the fuel cell stack reaches the second predetermined temperature threshold.

The method may further comprise causing the energy storage system to power the heating source to heat the fuel cell stack in the first mode.

A first quantity of fuel supplied to the fuel cell stack in the first mode may be less than a second quantity of fuel supplied to the fuel cell stack in the second mode.

Various features and advantages of at least one disclosed example aspect or embodiment will become apparent to those skilled in the art from the following detailed description. The drawing that accompanies the detailed description can be briefly described as follows.

The invention is defined by the appended claims. However, for the purposes of the present disclosure it will be understood that any of the features defined above or described below may be utilised in isolation or in combination. For example, features described above in relation to one of the above aspects or below in relation to the detailed description may be utilised in any other aspect, or together form a new aspect.

## BRIEF DESCRIPTION OF THE DRAWING

Figure 1 schematically discloses a hydrogen system including one or more fuel stacks.
Figure 2 discloses a method for operating a fuel stack.
Figures 3-4 disclose plots associated with operation of a fuel stack.

## DETAILED DESCRIPTION

Hydrogen powerplant systems designed according to the teachings disclosed herein may be useful for generating electricity that can be used for a variety of purposes separate from the system itself. The systems may incorporate one or more fuel stacks that may be operated during a cold start to provide electricity to one or more (e.g., customer) loads.

A hydrogen system for generating power may include a phosphoric acid fuel cell stack selectively coupled to a hydrogen fuel source. A control may include a processor and memory. The control may be configured to cause the fuel cell stack to operate in a first mode in response to a first predetermined temperature threshold being met such that the fuel cell stack may generate electricity when below a target operating temperature of the fuel cell stack. The control may be configured to cause the fuel cell stack to operate in a second mode in response to a second predetermined temperature threshold being met subsequent to the first predetermined temperature threshold being met. The second predetermined temperature threshold may be associated with the target operating temperature of the fuel cell stack.

In any implementations, the first predetermined temperature threshold may be less than 50 percent of the second predetermined temperature threshold.

In any implementations, the first predetermined temperature threshold may be less than 60 degrees Celsius.

A method of operating a phosphoric acid fuel cell stack may include operating the phosphoric acid fuel cell stack in a first mode in response to a first predetermined temperature threshold being met such that the fuel cell stack may generate electricity below a target operating temperature of the fuel cell stack. The method may include operating the fuel cell stack in a second mode in response to a second predetermined temperature threshold being met subsequent to the first predetermined temperature threshold being met. The second predetermined temperature threshold may be associated with the target operating temperature of the fuel cell stack.

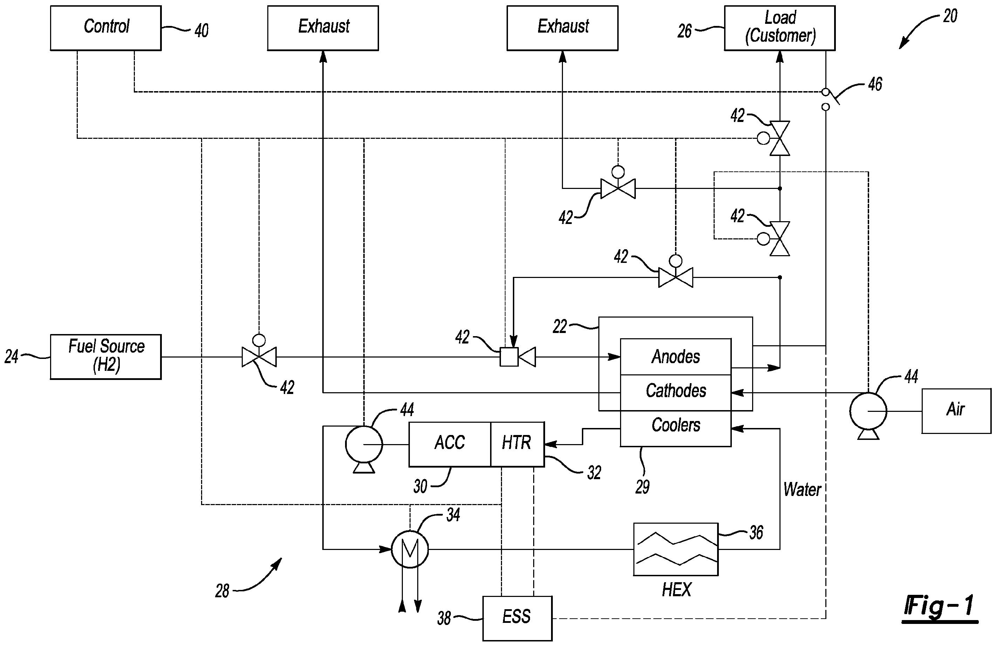

Figure 1 discloses a hydrogen system (e.g., powerplant) 20 including one or more fuel cell stacks 22. Each stack 22 may include a plurality of fuel cells. In implementations, the stack 22 may be a phosphoric acid fuel cell (PAFC) stack. Each of the fuel cells may include an anode and a cathode on opposite sides of an electrolyte. The electrolyte may be contained in a solid polymer electrolyte membrane. The cathode may generate exhaust in the form of water ($H_2O$) and unused oxygen (O). The anode may generate exhaust in the form of unused hydrogen ($H_2$), which may be recycled in the fuel stream to the stack 22. Each stack 22 may be coupled to a fuel source 24. The fuel source 24 may be a container configured to convey fuel such as hydrogen to the stack(s) 22. In implementations, the system 20 excludes any reformers for supplying hydrogen fuel to the stack(s) 22.

Each stack 22 may be coupled to one or more (e.g., customer) loads 26. Each load 26 may be an electrical and/or thermal load. The stack 22 may be configured to supply electricity and/or heat in a fluid stream to the load 26. The system 20 may include an inverter that may be configured to convert DC power from the stack(s) 22 into AC power on the grid. The AC power may be communicated to the load(s) 26.

The system 20 may include a cooling assembly 28 for providing cooling and/or heating augmentation to the stack(s) 22. The cooling assembly 28 may include a cooling loop. The cooling assembly 28 may include one or more coolers 29. The cooler(s) 29 may be situated in the cooling loop. Each stack 22 may be coupled to one or more of the coolers 29. Each cooler 29 may be configured to provide cooling and/or heat augmentation to the stack 22. The cooler 29 may be coupled to one or more accumulator(s) (ACC) 30 and/or heating source(s) 32, which may be situated in the cooling loop. The accumulator 30 may be configured to accumulate water in the cooling loop. One or more heat exchangers 34, 36 (HEX) may be situated in the cooling loop. The heat exchangers 34, 36 may be configured to deliver heat to a customer and/or control temperatures in the cooling loop. In implementations, the heating source 32 may be a thermal management system (TMS). The heating source 32 may be configured to provide heating augmentation to a fluid in the cooling loop prior to, during and/or subsequent to operation of the stack(s) 22. The thermal management system may include one or more heaters which may be configured to draw power from a source, such as a power grid or standalone device.

The system 20 may include an energy storage system (ESS) 38. The energy storage system 38 may include various energy storage devices, such as batteries and capacitors. The energy storage system 38 may be configured to provide power to the heating source(s) 32, which may eliminate or otherwise reduce power draws from the grid.

The system 20 may include a control 40. The control 40 may include one or more analog and/or digital components. In implementations, the control 40 may include at least one or more processors and memory. The control 40 may be configured to execute one or more instructions to implement any of the features disclosed herein. The control 40 may be coupled to one or more valves 42, pumps 44 and switches 46 of the system 20.

The control 40 may be configured to cause the energy storage system 38 to provide power to the heating source(s) 32 such that the heating source(s) 32 provide heating augmentation to the stack(s) 22.

The control 40 may be configured to cause each stack 22 to operate in one or more modes. Each stack 22 may be associated with a target (e.g., nominal or standard) operating temperature or range. The target operating temperature or range may be a temperature, or range of temperatures, sufficient to convert a predetermined percentage of the fuel conveyed to the stack 22 into energy without degradation of the stack 22 (e.g., due to excessive temperatures).

The control 40 may be configured to cause the stack(s) 22 to operate in a first mode and a second, different mode. The first mode may be a start up (e.g., cold start) mode of the stack 22. The second mode may be a standard operating mode of the stack 22. The first mode may be associated with a first predetermined temperature threshold. The second mode may be associated with a second predetermined temperature threshold. The second predetermined temperature threshold may be greater than the first predetermined temperature threshold. In implementations, the second predetermined temperature threshold may be the target operating temperature and/or within the target operating temperature range of the stack 22. In implementations, the first predetermined temperature threshold may be less than 50 percent of the second predetermined temperature threshold, or more narrowly less than 33 percent of the second predetermined temperature threshold. In implementations, the first predetermined temperature threshold may be less than approximately 60 degrees Celsius, such as approximately 55 degrees Celsius. The second predetermined temperature threshold may be greater than 150 degrees Celsius, such as approximately 175 degrees Celsius. For the purposes of this disclosure, the terms "approximately" and "substantially" mean ±5% of the stated value or relationship unless otherwise indicated.

The stack(s) 22 may be configured to generate power in the first mode when a temperature of the respective stack 22 reaches the first predetermined temperature threshold. The control 40 may be configured to cause the heating source(s) 32 to heat the stack(s) 22 in the first mode from the first predetermined temperature threshold to the second predetermined temperature threshold. A maximum quantity of power producible by the stack(s) 22 in the second mode may be greater than the maximum quantity of power produced by the stack(s) 22 in the first mode. In implementations, performance of the respective stack 22 when operating in the first mode may be less than performance of the stack 22 when operating in the second mode (e.g., at the target operating temperature or range). Utilizing the techniques disclosed herein, the stack(s) 22 may be configured to generate power concurrently with heating the stack(s) 22 to the target operating temperature or range.

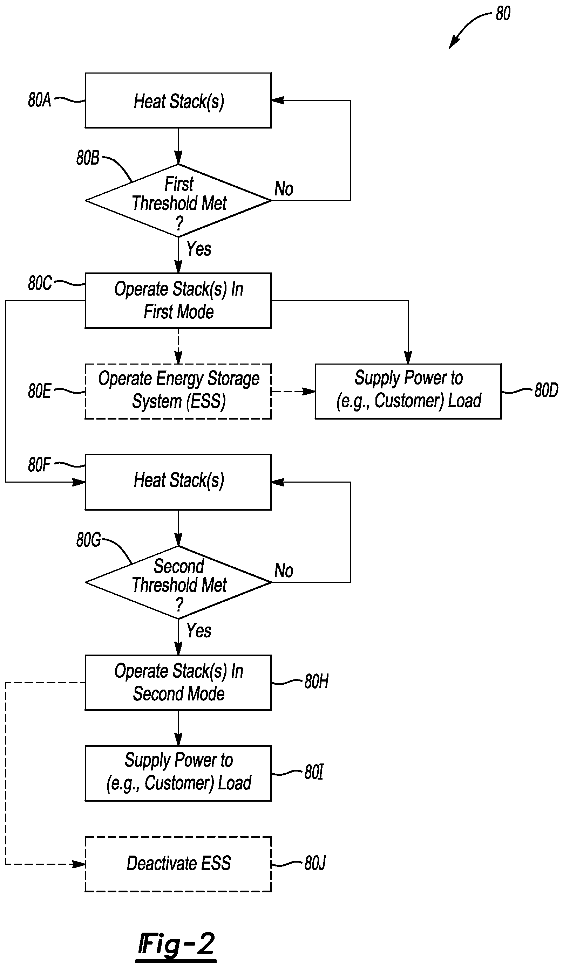

Figure 2 discloses a method of operating a fuel stack in a flowchart 80 according to an implementation. The fuel stack may include any of the fuel stacks disclosed herein, such as the fuel stack 22 of Figure 1. Fewer or additional steps than are recited below could be performed within the scope of this disclosure, and the recited order of steps is not intended to limit this disclosure. The control 40 may be configured to perform any of the features of the method 80. Reference is made to the system 20 of Figure 1.

At step 80A, the stack(s) 22 may be heated by one or more heating sources, such as the heating source(s) 32. At step 80B, a determination is made whether a present temperature of the respective stack 22 meets the first predetermined temperature threshold (e.g., approximately 55 degrees Celsius or more). One or more temperature sensors may be coupled to the stack 22. The sensors may communicate temperature information associated with the present temperature of the respective stack 22 to the control 40. The control 40 may be configured to compare the present temperature to the first predetermined temperature threshold to make the determination. In implementations, fuel from the fuel source 24 may not be supplied to the stack 22 prior to the first predetermined temperature threshold being met such that the stack 22 is in a non-operational mode.

At step 80C, the stack(s) 22 may be configured to operate in the first mode in response to the first predetermined temperature threshold being met. In implementations, the control 40 may be configured to acuate the valve 42 to selectively cause the fuel source 24 to supply a quantity of fuel such as hydrogen to the fuel stack(s) 22 such that the stack(s) 22 may generate an amount of electricity, which may be in the form of direct current (DC).

Customer(s) associated with the load(s) 26 may have a power demand when the stack(s) 22 are operating in the first mode. The stack(s) 22 may supply power to one or more loads 26 during the first mode at step 80D. The stack(s) 22 may produce a quantity of power sufficient to partially meet the customer power demand subsequent to reaching the first predetermined temperature threshold. In implementations, the quantity of power produced by the stack(s) 22 in the first mode may be insufficient to meet an entirety of the power demand. A difference of the power demand may be met by one or more other sources. The control 40 may be configured to actuate (e.g., close) the switch 46 to provide electricity to the load(s) 26 when in the first mode. The switch 46 may be open prior to the stack 22 operating in the first mode.

At step 80E, the energy storage system 38 may supply a difference in the power demand in the first mode such that the power demand may be substantially met. The control 40 may be configured to cause the energy storage system 38 to supply the difference in the power demand in the first mode.

At step 80F, the stack(s) 22 may be heated during the first mode to at least an intermediate temperature. The intermediate temperature may be between the first predetermined temperature threshold and the second predetermined temperature threshold (e.g., approximately 175 degrees Celsius). The stack(s) 22 may be configured to produce full DC power at the intermediate temperature. The stack 22 may be heated by various heating sources, including the heating sources 32 and/or waste heat from the respective stack(s) 22. The control 40 may cause the energy storage system 38 to power the heating source(s) 32 to heat the stack(s) 22 during the first mode. The control 40 may be configured to cause the energy storage system 38 to power the heating source(s) 32 such that the stack(s) 22 may reach or otherwise approach the second predetermined temperature threshold, which may be the target operating temperature or range.

At step 80G, a determination is made whether a present temperature of the respective stack 22 meets the second predetermined temperature threshold (e.g., approximately 175 degrees Celsius or more). The control 40 may be configured to compare the present temperature to the second predetermined temperature threshold to make the determination.

At step 80H, the stack(s) 22 may be configured to operate in the second mode in response to the second predetermined temperature threshold being met. In implementations, the control 40 may be configured to cause the valve 42 to selectively cause the fuel source 24 to supply a quantity of fuel such as hydrogen to the fuel stack(s) 22 such that the stack(s) 22 may generate an amount of electricity, which may be in the form of direct current (DC). The quantity of fuel supplied to the stack(s) 22 at step 80H may be the same or may differ from (e.g., may be greater than) the amount of fuel supplied to the stack(s) 22 at step 80C.

The stack(s) 22 may supply power to one or more loads 26 during the second mode at step 80I. In implementations, a (e.g., maximum) quantity of power produced by the stack(s) 22 in the second mode may be greater than the (e.g., maximum) quantity of power produced by the stack(s) 22 in the first mode. The stack(s) 22 may produce a quantity of power sufficient to substantially, or completely, meet the customer power demand in response to the present temperature of the respective stack 22 meeting the second predetermined temperature threshold.

At step 80J, the energy storage system 38 may be deactivated when the stack(s) 22 are in the second mode. The control 40 may be configured to cause the energy storage system 38 to be deactivated in response to the present temperature of the stack(s) 22 meeting the second predetermined temperature threshold.

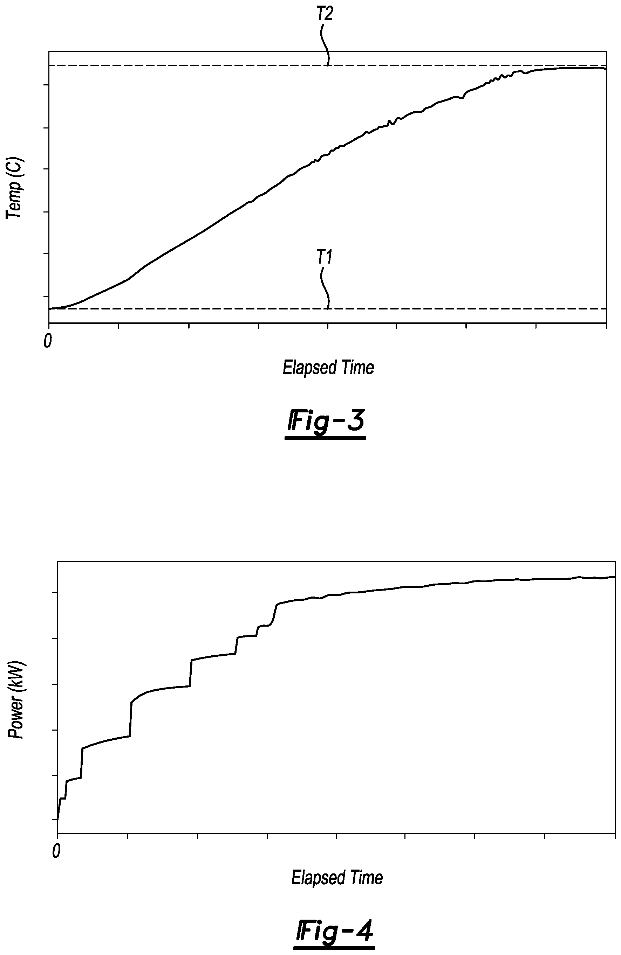

Figures 3-4 disclose example plots associated with operation of the stack(s) 22 over a period of time (e.g., 40 minutes) utilizing the techniques disclosed herein. Figure 3 discloses a plot of exit temperature in degrees Celsius (C) associated with the stack 22 with respect to elapsed time. The plot may be associated with a first predetermined temperature threshold T1 and/or a second predetermined temperature threshold T2. In the implementation of Figure 3, the plot may be associated with a range of temperatures between approximately 55 degrees and approximately 175 degrees Celsius. The current may exceed 500 amps during normal operation. In implementations, the current may not exceed approximately 550 amps. Figure 4 discloses a plot of powerplant equivalent DC power in kilowatts (kW) with respect to elapsed time. In the implementation of Figure 4, the plot may be associated with power that may exceed 500 kW DC.

The control 40 may be operable to cause the stack 22 to run at a preselected current density (CD) level during the first (e.g., start up or cold start) mode. In implementations, the preselected CD level may be the highest CD possible during the first mode. The highest CD possible may be associated with a maximum limit that should not be exceeded based on a rating of the balance of plant (BOP) components. The preselected CD level may be selected such that the powerplant exceeds an (e.g., minimum) voltage threshold. In implementations, the preselected CD level may meet the following formula:

$$\textit{Equation 1}: \text{Current density (CD)} = \text{Min(CDminvolt, CDmax)}$$

where CDmax is a maximum current that the stack 22 can support (e.g., approximately 550 A), and CDminvolt is the minimum voltage required for DC to AC power conversion at a required AC voltage (e.g., approximately 800 V DC) associated with the customer load(s) 26. The control 40 may be operable to vary reactants to the stack 22 based on the preselected CD level during operation.

The preceding description is illustrative rather than limiting in nature. Variations and modifications to the disclosed examples may become apparent to those skilled in the art that do not necessarily depart from the essence of this invention.

**Claims**

1. A hydrogen system for generating power comprising:

   a phosphoric acid fuel cell stack selectively coupled to a hydrogen fuel source; and
   a control including a processor and memory;
   wherein the control is configured to cause the fuel cell stack to operate in a first mode in response to a first predetermined temperature threshold being met such that the fuel cell stack generates electricity when below a target operating temperature of the fuel cell stack; and
   wherein the control is configured to cause the fuel cell stack to operate in a second mode in response to a second predetermined temperature threshold being met subsequent to the first predetermined temperature threshold being met, the second predetermined temperature threshold associated with the target operating temperature of the fuel cell stack.

2. The hydrogen system as recited in claim 1, wherein the first predetermined temperature threshold is less than 50 percent of the second predetermined temperature threshold.

3. The hydrogen system as recited in claim 1 or 2, wherein:

   the first predetermined temperature threshold is less than 60 degrees Celsius; and
   the second predetermined temperature threshold is greater than 150 degrees Celsius; optionally
   wherein the first predetermined temperature threshold is less than 33 percent of the second predetermined temperature threshold.

4. The hydrogen system as recited in claim 1 or 2, wherein the first predetermined temperature threshold is less than 60 degrees Celsius.

5. The hydrogen system as recited in any preceding claim, wherein the second predetermined temperature threshold is a temperature sufficient to convert a predetermined percentage of the fuel conveyed to the fuel cell stack into energy without degradation of the fuel cell stack.

6. The hydrogen system as recited in any preceding claim, wherein the fuel cell stack includes a plurality of fuel cells, each of the fuel cells include an anode, a cathode and a solid polymer electrolyte membrane.

7. The hydrogen system as recited in any preceding claim, further comprising:
   a cooling assembly for providing cooling and/or heating augmentation to the fuel cell stack, the cooling assembly comprising:

   a cooling loop;
   a cooler coupled to the fuel cell stack; and
   a heating source;
   wherein the cooler and the heating source are situated in the cooling loop.

8. The hydrogen system as recited in claim 7, further comprising:

   an energy storage system configured to provide power to the heating source; and
   wherein the controller is configured to cause the energy storage system to provide power to the heating source such that the heating source provides heating augmentation to the fuel cell stack; optionally
   wherein:
   the control is configured to cause the heating source to heat the fuel cell stack in the first mode from the first predetermined temperature threshold to the second predetermined temperature threshold.

9. The hydrogen system as recited in any preceding claim, wherein:
   a maximum quantity of power produceable by the fuel cell stack in the second mode is greater than a maximum quantity of power produceable by the fuel cell stack in the first mode.

10. A method of operating a phosphoric acid fuel cell stack comprising:

    operating the phosphoric acid fuel cell stack in a first mode in response to a first predetermined temperature threshold being met such that the fuel cell stack generates electricity below a target operating temperature of the fuel cell stack; and
    operating the fuel cell stack in a second mode in response to a second predetermined temperature threshold being met subsequent to the first predetermined temperature threshold being met, the second predetermined temperature threshold associated with the target operating temperature of the fuel cell stack.

11. The method as recited in claim 10, wherein the first predetermined temperature threshold is less than 50 percent of the second predetermined temperature threshold; optionally
    wherein:

    the first predetermined temperature threshold is less than 60 degrees Celsius; and
    the second predetermined temperature threshold is greater than 150 degrees Celsius.

12. The method as recited in any preceding claim, wherein:
    the step of operating the fuel cell stack in the first mode includes heating the fuel cell stack by a heating source.

13. The method as recited in any preceding claim, wherein:

    the step of operating the fuel cell stack in the first mode includes supplying a first quantity of power to one or more loads associated with a power demand; and
    the step of operating the fuel cell stack in the second mode includes supplying a second quantity of power to the one or more loads, the second quantity of power being greater than the first quantity of power.

14. The method as recited in claim 13, wherein the first quantity of power is insufficient to meet an entirety of the power demand, and further comprising:

> causing an energy storage system to supply a difference in the power demand in the first mode such that the power demand is substantially met; optionally
> wherein:
>
> > the step of operating the fuel cell stack in the first mode includes heating the fuel cell stack by a heating source such that the fuel cell stack reaches the second predetermined temperature threshold; optionally
> > further comprising:
> > causing the energy storage system to power the heating source to heat the fuel cell stack in the first mode.

15. The method as recited in any preceding claim, wherein:
a first quantity of fuel supplied to the fuel cell stack in the first mode is less than a second quantity of fuel supplied to the fuel cell stack in the second mode.

*Fig-1*

EP 4 492 508 A1

*Fig-2*

T2

T1

Temp (C)

0

Elapsed Time

**Fig-3**

Power (kW)

0

Elapsed Time

**Fig-4**

Europäisches
Patentamt

European
Patent Office

Office européen
des brevets

# EUROPEAN SEARCH REPORT

Application Number

EP 24 18 7551

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/017343 A1 (SONG TAE-WON [KR] ET AL) 15 January 2009 (2009-01-15) * claims 1-21 * * paragraphs [0013] - [0019] * | 1-15 | INV. H01M8/04007 H01M8/04302 H01M8/0432 H01M8/04701 |
| X | EP 3 633 778 A1 (MICO LTD [KR]) 8 April 2020 (2020-04-08) * claims 1-8 * | 1-15 | H01M8/065 H01M8/086 H01M16/00 |
| X | US 2021/367252 A1 (KOYAMA HAROL [US] ET AL) 25 November 2021 (2021-11-25) * claims 1-25 * * paragraphs [0027] - [0030] * * paragraph [0113] * | 1-15 | ADD. H01M8/10 |
| X | US 2018/323453 A1 (ARISETTY SRIKANTH [US] ET AL) 8 November 2018 (2018-11-08) * claims 1-20 * * paragraphs [0004], [0006], [0009], [0015] * | 1,5,6,10 | |
| A | | 2-4,7-9, 11-15 | |
| | | | TECHNICAL FIELDS SEARCHED (IPC) |
| A | EP 1 187 242 A2 (HONDA MOTOR CO LTD [JP]) 13 March 2002 (2002-03-13) * claims 3-7 * | 1-15 | H01M |

The present search report has been drawn up for all claims

| Place of search | Date of completion of the search | Examiner |
|---|---|---|
| Munich | 25 November 2024 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 7551

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | Publication date |
|---|---|---|---|
| US 2009017343 A1 | 15-01-2009 | KR 20090006593 A<br>US 2009017343 A1 | 15-01-2009<br>15-01-2009 |
| EP 3633778 A1 | 08-04-2020 | EP 3633778 A1<br>KR 20180128288 A<br>WO 2018217005 A1 | 08-04-2020<br>03-12-2018<br>29-11-2018 |
| US 2021367252 A1 | 25-11-2021 | CN 115735169 A<br>TW 202147676 A<br>US 2021367252 A1<br>US 2022246959 A1<br>WO 2021236810 A1 | 03-03-2023<br>16-12-2021<br>25-11-2021<br>04-08-2022<br>25-11-2021 |
| US 2018323453 A1 | 08-11-2018 | CN 108878926 A<br>DE 102018110809 A1<br>US 2018323453 A1 | 23-11-2018<br>08-11-2018<br>08-11-2018 |
| EP 1187242 A2 | 13-03-2002 | EP 1187242 A2<br>JP 2002083621 A<br>US 2002051900 A1 | 13-03-2002<br>22-03-2002<br>02-05-2002 |

For more details about this annex : see Official Journal of the European Patent Office, No. 12/82